# DEMANDE DE BREVET EUROPEEN

(11) **EP 1 566 894 A1**
(43) Date de publication de la demande: **24.08.2005**
(21) Numéro de dépôt: 05290269.9
(22) Date de dépôt: 07.02.2005
(51) Int. Cl.: H04B 3/23

(54) **Dispositif de commande d'un limiteur d'écho résiduel**

(30) Priorité: 18.02.2004 FR 0450300
(71) Demandeur: ALCATEL, 75008 Paris (FR)
(72) Inventeur: Fadili, Moulay, 95130 Franconville (FR); Moulhiawy, Abdelkrim, 75002 Paris (FR)
(74) Mandataire: Sciaux, Edmond

(57) **Abrégé**

Un dispositif (D) est dédié à la réduction d'écho, par exemple au sein d'un serveur de communications (SC). Ce dispositif (D) comprend i) des moyens de filtrage (F1, F2), à coefficients de filtrage adaptatifs, chargés de délivrer un signal d'écho résiduel (SER) à partir d'un signal transmis (Tx) et d'un signal reçu (Rx), ii) des moyens de traitement (MT) chargés de délivrer un signal traité (ST) à signal d'écho résiduel (SER) réduit, lorsque ce dernier présente un niveau inférieur ou égal à un seuil choisi, et iii) des moyens de gestion (MG), couplés aux moyens de filtrage (F1) et aux moyens de traitement (MT), et chargés, pendant la phase de convergence du niveau du signal d'écho résiduel SER vers un seuil de référence choisi, d'estimer la valeur d'un paramètre représentatif du niveau du signal d'écho (E), contenu dans le signal reçu (Rx), et de faire varier de façon dynamique le seuil, utilisé par les moyens de traitement (MT), en fonction de la valeur estimée du paramètre, afin que les moyens de traitement (MT) puissent délivrer de façon sensiblement permanente un signal traité (ST) présentant un signal d'écho résiduel (SER) réduit, et de préférence sensiblement nul.

## Description

L'invention concerne le domaine des communications, et plus précisément les dispositifs permettant de réduire (ou d'annuler) l'écho survenant lors de certaines communications.

Comme le sait l'homme de l'art, certaines communications sont sujettes à des phénomènes d'écho lorsque les caractéristiques de la liaison utilisée ne sont pas connues des équipements de communication impliqués. C'est notamment le cas des communications audio dans les réseaux à protocole Internet, plus connues sous l'expression anglaise « Voice over IP communications ».

On entend ici par « équipements de communication », non seulement des équipements comportant un haut-parleur et un microphone, tels que des terminaux de communication, mais également des équipements gérant des communications, tels que des passerelles (ou « gateways ») ou des serveurs de communications (comme par exemple des PABX).

Pour tenter de remédier à l'inconvénient précité il a été proposé de munir certains équipements précités, et plus fréquemment les serveurs de communications, d'un dispositif de réduction d'écho. Ce dispositif traite le signal reçu sur la ligne de réception d'un terminal de communication, ce signal comportant un signal d'écho représentatif du signal transmis sur la ligne de transmission dudit terminal de communication. Ce dispositif atténue l'écho mais il laisse passer néanmoins un signal d'écho résiduel qui décroît progressivement de sorte qu'il converge vers un seuil de référence choisi. Il est connu de réduire voire supprimer le signal d'écho résiduel au moyen d'un circuit additionnel afin de délivrer un signal traité présentant un signal d'écho résiduel réduit.

La durée de la phase de décroissance du signal d'écho résiduel (ou phase de convergence) dépend du temps nécessaire au dispositif pour ajuster les coefficients du filtre. En raison du mode de suppression de l'écho par seuillage, tant que la phase de convergence n'est pas terminée, le signal d'écho résiduel ne peut pas être supprimé, et par conséquent l'interlocuteur qui parle entend l'écho de ses propres paroles. Plus le délai de transmission des signaux (ou données) entre deux terminaux de communication est important, plus la gêne occasionnée par le signal d'écho est importante.

Certes, il est possible d'augmenter le niveau du seuil de référence afin de réduire la durée de la phase de convergence, mais cela induit un phénomène dit « de double conversation » (ou « double talk ») qui interdit à chaque interlocuteur d'entendre ce que lui dit l'autre interlocuteur.

Il est également possible d'utiliser des algorithmes de convergence rapide, mais ces algorithmes ne permettent toujours pas de supprimer l'écho des premières paroles d'une conversation lorsque le niveau de cet écho est élevé. En outre, de tels algorithmes sont coûteux en terme de complexité de traitement. Le document **US 6.195.430** (figure 2) décrit un dispositif de réduction d'écho comprenant des moyens de filtrage, à coefficients de filtrage adaptatifs, propres à délivrer un signal représentatif de l'écho, et des moyens pour soustraire, du signal reçu, ce signal représentatif de l'écho. Ces moyens pour soustraire restituent un signal qui contient un signal d'écho résiduel, et ce dernier est utilisé pour calculer des coefficients qui déterminent les caractéristiques des moyens de filtrage.

Ce document décrit en outre (figure 3) un circuit de traitement additionnel réalisant une réduction de l'écho résiduel, Ce circuit de traitement additionnel bloque la transmission du signal d'écho résiduel lorsque ce dernier présente un niveau inférieur ou égal à un seuil dynamique. Il le laisse passer dans le cas contraire. Il comporte des moyens de gestion couplés aux moyens de filtrage, et agencés pour calculer une valeur de seuil dynamique qui est fonction du signal d'écho estimé et d'un facteur d'échelle qui est constant.

Ce document décrit en outre (figure 4) un autre circuit de traitement additionnel réalisant une réduction de l'écho résiduel, et dans lequel la valeur de seuil dynamique est calculée d'une autre manière : Il calcule la puissance du signal d'écho résiduel puis une valeur de seuil qui est égale à une combinaison linéaire de l'estimation de puissance d'erreur linéaire et de l'estimation de puissance d'erreur non linéaire.

Aucun dispositif de réduction d'écho connu n'apportant une entière satisfaction, l'invention a donc pour but d'améliorer la situation.

Un premier objet de l'invention est un dispositif de réduction d'un signal d'écho affectant un signal reçu et provenant d'un signal transmis, ce dispositif comprenant :
- des moyens de filtrage, à coefficients de filtrage adaptatifs, pour délivrer un signal dit d'un écho estimé, à partir d'un signal transmis,
- des moyens de soustraction pour délivrer un signal dit à écho résiduel à partir d'un signal reçu, et du signal d'écho estimé,
- des moyens de traitement pour délivrer un signal dit à écho résiduel réduit, à partir du signal à écho résiduel, lorsque le signal à écho résiduel présente un niveau inférieur ou égal à un seuil choisi ;
- des moyens pour estimer la valeur d'un paramètre représentatif du niveau du signal d'écho pendant une phase de convergence du niveau du signal d'écho résiduel vers un seuil de référence choisi,
- et des moyens pour calculer dynamiquement le seuil utilisé par lesdits moyens de traitement, en fonction de ladite valeur estimée d'un paramètre représentatif du niveau du signal d'écho, de sorte que lesdits moyens de traitement délivrent de façon sensiblement permanente ledit signal à écho résiduel réduit ;
**caractérisé** en ce que ledit paramètre représentatif est la perte de retour d'écho, dont la valeur représente l'atténuation de niveau entre le signal transmis et le signal d'écho affectant un signal reçu et provenant du signal transmis.

Un second objet de l'invention est un dispositif de réduction d'un signal d'écho affectant un signal reçu et provenant d'un signal transmis, ce dispositif comprenant :
- des moyens de filtrage, à coefficients de filtrage adaptatifs, pour délivrer un signal dit d'un écho estimé, à partir d'un signal transmis,
- des moyens de soustraction pour délivrer un signal dit à écho résiduel à partir d'un signal reçu, et du signal d'écho estimé,
- des moyens de traitement pour délivrer un signal dit à écho résiduel réduit, à partir du signal à écho résiduel, lorsque le signal à écho résiduel présente un niveau inférieur ou égal à un seuil choisi ;
- des moyens pour estimer la valeur d'un paramètre représentatif du niveau du signal d'écho pendant une phase de convergence du niveau du signal d'écho résiduel vers un seuil de référence choisi,
- et des moyens pour calculer dynamiquement le seuil utilisé par lesdits moyens de traitement, en fonction de ladite valeur estimée d'un paramètre représentatif du niveau du signal d'écho, de sorte que lesdits moyens de traitement délivrent de façon sensiblement permanente ledit signal à écho résiduel réduit ;
caractérisé en ce que ledit paramètre représentatif est une estimation de la durée de la phase de convergence du niveau du signal d'écho résiduel vers un seuil de référence choisi.

De préférence, les moyens pour calculer le seuil sont agencés de manière à faire varier le seuil de façon dynamique lorsque la valeur estimée est inférieure à une valeur choisie.

Par ailleurs, les moyens pour calculer le seuil sont préférentiellement chargés de fixer la valeur du seuil à une valeur égale au seuil de référence lorsque la phase de convergence est terminée.

L'invention propose également un serveur de communications (ou passerelle) équipé d'au moins un dispositif de réduction d'écho du type de celui présenté ci-avant. Un serveur de communications étant généralement de type multicanaux, il comprend le plus souvent plusieurs dispositifs de réduction d'écho fonctionnant en parallèle indépendamment les uns des autres et dédiés chacun à l'un des canaux.

L'invention est particulièrement bien adaptée, bien que de façon non exclusive au domaine des communications audio selon le protocole Internet (ou VolP pour « Voice Over IP »).

D'autres caractéristiques et avantages de l'invention apparaîtront à l'examen de la description détaillée ci-après, et des dessins annexés, sur lesquels :
- la figure 1 illustre de façon schématique un exemple de réalisation d'un dispositif de réduction d'écho selon l'invention, et
- la figure 2 illustre de façon schématique un exemple de variation du seuil en fonction de la durée de la phase de convergence et de la valeur du coefficient de filtrage maximum.

Les dessins annexés pourront non seulement servir à compléter l'invention, mais aussi contribuer à sa définition, le cas échéant.

L'invention a pour objet de permettre la réduction (et si possible la suppression) d'écho, notamment dès le début d'une conversation instaurée entre deux interlocuteurs via leurs équipements de communication.

Par « équipement de communication » on entend ici tout équipement permettant à une personne de converser à distance avec une autre personne, pourvue d'un autre équipement de communication. Il pourra donc s'agir d'un terminal de communication capable d'échanger des données avec un réseau de communications, comme par exemple un téléphone fixe ou mobile, ou un assistant personnel numérique (ou PDA) ou un ordinateur, fixe ou portable, équipé d'une interface de communication.

Dans ce qui suit on considère, à titre d'exemple illustratif, que les équipements de communication sont des téléphones mobiles.

Par ailleurs, on considère dans ce qui suit, également à titre d'exemple illustratif, que les téléphones mobiles sont adaptés aux communications audio selon le protocole Internet (ou VoIP pour « Voice Over IP »).

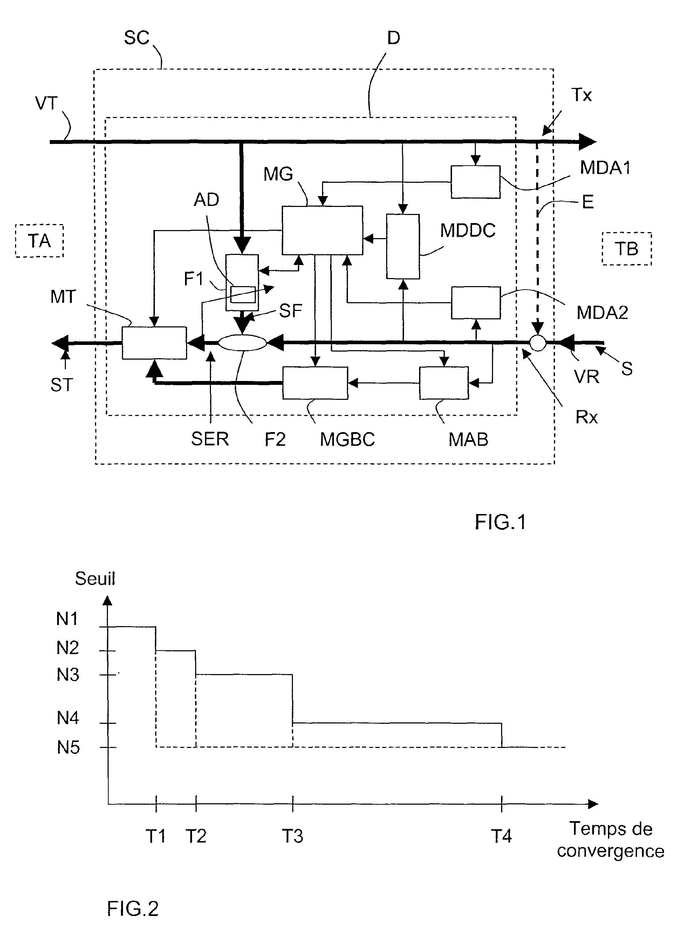

Comme cela est illustré schématiquement sur la figure 1, l'invention propose un dispositif de réduction d'écho D destiné à être préférentiellement implanté dans un équipement de réseau de communications, comme par exemple un serveur de communications de type PABX ou une passerelle (ou « gateway »), éventuellement du type dit « à convergence voix/données ». On considère dans ce qui suit que l'équipement de réseau dans lequel est implanté le dispositif D selon l'invention est un serveur de communication SC. On peut noter qu'un serveur de communications étant généralement de type multicanaux, il comprend de ce fait plusieurs dispositifs D selon l'invention fonctionnant en parallèle, indépendamment les uns des autres et dédiés chacun à l'un des canaux

On peut également noter que le dispositif D selon l'invention peut être implanté dans un équipement de communication, tel qu'un terminal de communication.

Dans l'exemple illustré, le serveur de communication SC est pourvu d'un dispositif D raccordé à une voie de transmission VT, qui lie un premier téléphone TA à un second téléphone TB, et à une voie de réception VR, qui lie ledit second téléphone TB audit premier téléphone T1, pendant la durée d'une communication (ou liaison).

Les signaux (ou données) qui circulent dans la voie de transmission VT (de TA vers TB) sont appelés signaux transmis Tx, tandis que les signaux (ou données) qui circulent dans la voie de réception VR (de TB vers TA) sont appelés signaux reçus Rx.

Il est important de noter que le signal reçu Rx est égal soit à l'écho E issu du signal transmis Tx, lorsque seul l'utilisateur du premier téléphone TA parle, soit au signal audio S provenant du second téléphone, lorsque seul l'utilisateur du second téléphone TB parle.

Dans sa version la plus simple, le dispositif selon l'invention D comprend tout d'abord des moyens de filtrage F1 et F2, à coefficients de filtrage (auto-)adaptatifs, chargés de délivrer un signal d'écho résiduel SER (ou signal d'erreur) à partir du signal transmis Tx (sur la voie de transmission VT) et du signal reçu Rx (sur la voie de réception VR). Il comprend également un module de traitement MT chargé de délivrer un signal traité ST à signal d'écho résiduel SER (ou signal d'erreur) réduit, lorsque ce dernier présente un niveau inférieur ou égal à un seuil de référence (statique) choisi. Par ailleurs, il comprend un module de gestion MG, couplé aux moyens de filtrage F1 et au module de traitement MT, et chargé, pendant la phase de convergence du niveau du signal d'écho résiduel SER vers le seuil de référence choisi, d'estimer la valeur d'un paramètre représentatif du niveau du signal d'écho E et de faire varier de façon dynamique le seuil, utilisé par le module de traitement MT, en fonction de la valeur estimée du paramètre d'écho, afin que ce dernier puisse délivrer de façon sensiblement permanente un signal traité ST présentant un signal d'écho résiduel SER réduit, et de préférence sensiblement nul.

D'une façon plus détaillée, et comme illustré sur la figure 1, le module de filtrage est préférentiellement réalisé sous la forme d'un filtre F1, comportant un module d'adaptation de coefficients de filtrage AD, et d'un module de soustraction F2.

Le filtre F1 est chargé de délivrer sur une sortie un signal de filtrage SF, représentatif de l'écho estimé, destiné à être retranché du signal reçu Rx par le module de soustraction F2 pour constituer un signal d'écho résiduel SER (ou signal d'erreur). Pour ce faire, il est couplé, d'une première part, à la voie de transmission VT afin d'analyser les signaux transmis Tx, d'une deuxième part, à l'une des deux entrées du module de soustraction F2 pour l'alimenter en signaux de filtrage SF, et d'une troisième part, à la sortie du module de soustraction F2, qui délivre le signal d'écho résiduel SER, afin de fonctionner en contre-réaction.

Ce filtre F1 est par exemple un filtre numérique à réponse finie (ou FIR), bien connu de l'homme de l'art. Le niveau du signal filtré SF qu'il délivre dépend des coefficients de filtrage qu'il applique et qui sont déterminés par son module d'adaptation AD en fonction du niveau du signal d'écho résiduel SER délivré en sortie du module de soustraction F2.

Le module de soustraction F2 est chargé de délivrer le signal d'écho résiduel SER résultant de la soustraction du signal de filtrage SF du signal reçu Rx. Pour ce faire, le module de soustraction F2 comprend une première entrée de signaux alimentée en signal reçu Rx, une seconde entrée de signaux couplée à la sortie du filtre F1, afin d'être alimenté en signaux de filtrage SF, et une sortie délivrant le signal d'écho résiduel SER (SER=Rx-SF).

Le module de traitement MT est chargé de supprimer le signal d'écho résiduel (ou signal d'erreur) SER lorsque son niveau est inférieur ou égal au niveau du seuil qui est fixé dynamiquement par le module de gestion MG. Lorsque le signal d'écho résiduel SER est supérieur au niveau du seuil fixé, le module de traitement MT utilise un seuil statique choisi pour le supprimer.

Il comprend pour ce faire au moins une entrée de signaux alimentée en signaux d'écho résiduel SER par le module de soustraction F2, une entrée d'instructions alimentée en instructions représentatives du niveau de seuil à appliquer, délivrées par le module de gestion MG, et une sortie délivrant les signaux traités ST. Par ailleurs, il comprend un comparateur (non représenté) chargé de comparer le niveau du signal d'écho résiduel SER au niveau courant du seuil, fixé par le module de gestion MG, et qui lui sert à chaque instant de consigne (sauf lorsque le signal d'écho résiduel SER est supérieur au niveau du seuil fixé).

Le module de traitement MT est par exemple un processeur numérique non linéaire (ou NLP pour « Non Linear Processor »).

Comme mentionné ci-dessus, le module de gestion MG est chargé de déterminer pendant la phase de convergence du filtre F1, initiée au commencement de chaque conversation, le niveau du seuil qui doit être utilisé comme consigne par le module de traitement MT.

Cette détermination du niveau de seuil s'effectue à partir de l'estimation de la valeur d'un paramètre représentatif du niveau du signal d'écho E contenu dans le signal reçu Rx, compte tenu du signal transmis Tx.

Préférentiellement, ce paramètre est la perte de retour d'écho ou ERL (pour « Echo Return Loss »), qui représente l'atténuation de niveau entre le signal transmis Tx et l'écho E contenu dans le signal reçu Rx. Ce paramètre d'écho est particulièrement utile car, comme le sait l'homme de l'art, il existe une corrélation directe entre le coefficient de filtrage maximum que doit déterminer et appliquer le filtre F1 à un instant donné et la valeur de l'ERL à cet instant. On peut montrer que plus la valeur de l'ERL est petite, plus les coefficients de filtrage doivent être grands. Il est rappelé qu'une faible valeur de l'ERL correspond à un niveau de signal d'écho E élevé. On peut également montrer que la valeur du coefficient de filtrage maximum que doit appliquer le filtre F1 varie en fonction du temps de convergence dudit filtre F1 (c'est-à-dire le temps qu'il lui faut pour faire converger le signal d'écho résiduel SER vers le seuil de référence). En fait, la valeur du coefficient de filtrage maximum croît de façon quasi logarithmique avec le temps de convergence (et elle croît d'autant plus vite que la valeur de l'ERL est grande).

Afin d'estimer la valeur de ce paramètre d'écho ERL, le module de gestion MG doit disposer d'informations représentatives du niveau du signal transmis Tx et du niveau de l'écho E. Dans l'exemple de réalisation illustré, les informations représentatives du niveau du signal transmis Tx lui sont fournies par l'observation de la voie de transmission VT, tandis que les informations représentatives du niveau de l'écho E lui sont fournies par l'observation des coefficients de filtrage déterminés par le module d'adaptation AD du filtre F1. Le module de gestion MG déduit alors de ces informations le niveau du signal d'écho E contenu dans le signal reçu Rx, puis la valeur du paramètre d'écho ERL, par un procédé classique..

Une fois en possession de la valeur estimée du paramètre d'écho ERL, le module de gestion MG n'a plus qu'à déterminer le niveau de seuil à appliquer.

Il est rappelé que la valeur du seuil varie en fonction de l'estimation de la durée de la phase de convergence, laquelle dépend de la valeur estimée de l'ERL, ainsi que de préférence en fonction des coefficients de filtrage dont les valeurs, déterminées par le module d'adaptation AD du filtre F1, varient en fonction de la valeur estimée du paramètre d'écho ERL.

Deux méthodes de détermination du seuil peuvent être envisagées.

Une première méthode consiste à calculer directement le seuil à partir de formules qui le lient au paramètre d'écho ERL (par exemple), si la valeur estimée du paramètre d'écho ERL est inférieure à une valeur choisie ERL_{C}. Si la valeur estimée du paramètre d'écho ERL (par exemple) est supérieure à la valeur choisie ERL_{C}, le signal d'écho est considéré comme négligeable si bien qu'il n'est pas nécessaire de déterminer un seuil dynamique pour le module de traitement MT ; ce dernier utilise alors le seuil statique.

Une seconde méthode consiste à utiliser des règles du type de celles mentionnées ci-dessous.

Si la valeur estimée du paramètre d'écho ERL (par exemple) est inférieure à la valeur choisie ERL_{C}, et :
- si la durée de la phase de convergence est inférieure à une première durée choisie T1, alors le niveau du seuil à appliquer est égal à une première valeur choisie N1. Le niveau d'énergie du signal reçu Rx est alors supérieur à la somme du niveau d'énergie de l'écho résiduel SER et de N1,
- si la durée de la phase de convergence est comprise entre T1 et une deuxième durée choisie T2, supérieure à T1, et que les coefficients de filtrage sont supérieurs à une première valeur choisie C1, par exemple égale à 200, alors le niveau du seuil à appliquer est égal à une deuxième valeur choisie N2, inférieure à N1,
- si la durée de la phase de convergence est comprise entre T2 et une troisième durée choisie T3, supérieure à T2, et que les coefficients de filtrage sont supérieurs à une deuxième valeur choisie C2, par exemple égale à 512, alors le niveau du seuil à appliquer est égal à une troisième valeur choisie N3, inférieure à N2,
- si la durée de la phase de convergence est comprise entre T3 et une quatrième durée choisie T4, supérieure à T3, et que les coefficients de filtrage sont supérieurs à une troisième valeur choisie C3, par exemple égale à 1500, alors le niveau du seuil à appliquer est égal à une quatrième valeur choisie N4, inférieure à N3,
- si la durée de la phase de convergence est supérieure à T4, ou si l'un des deux critères d'analyse des trois précédentes situations n'est pas respecté, alors le niveau du seuil à appliquer est égal à une cinquième valeur choisie N5, inférieure à N4 et de préférence égale au seuil de référence.

L'exemple mentionné ci-dessus de variation du seuil en fonction de la durée de la phase de convergence et des valeurs des coefficients de filtrage est illustré sur la **figure 2**. Les traits en pointillés matérialisent les situations dans lesquelles les critères d'analyse ne sont pas simultanément satisfaits.

Bien entendu, d'autres exemples de variation du seuil en fonction de la durée de la phase de convergence, et éventuellement des valeurs des coefficients de filtrage peuvent être envisagés. Notamment, le nombre de situations d'analyse différentes (et donc le nombre de niveaux de seuil différents) peut être supérieur ou inférieur à cinq.

Dans l'une ou l'autre méthode, le module de gestion MG doit donc commencer par estimer la valeur en cours du paramètre d'écho ERL (par exemple), à partir des valeurs en cours des coefficients de filtrage, puis éventuellement la durée du temps de convergence qui correspond au coefficient de filtrage maximum. Puis, le module de gestion MG détermine le niveau de seuil dynamique, qu'il transmet au module de traitement MT afin qu'il l'utilise.

Lorsque la phase de convergence est terminée, c'est-à-dire lorsque la valeur du signal d'écho résiduel SER est inférieure au seuil de référence (par exemple N5), le module de traitement MT utilise le seuil statique dont le niveau est égal audit seuil de référence (par exemple - 30 dB).

Comme cela est illustré sur la **figure 1**, le dispositif de réduction d'écho D peut comporter des modules complémentaires.

Par exemple, il peut comporter un module de détection de double conversation MDDC couplé à la fois à la voie de transmission VT et à la voie de réception VR. Ce module MDDC fournit au module de gestion MG des informations complémentaires sur les signaux transmis Tx et reçu Rx, qui lui permettent d'affiner son estimation de la valeur du paramètre d'écho (par exemple l'ERL).

Il peut également comprendre un premier module de détection audio MDA1 couplé à la voie de transmission VT et chargé de lui signaler lorsque l'utilisateur du premier téléphone TA parle. Il peut également comprendre un second module de détection audio MDA2 couplé à la voie de réception VR et chargé de lui signaler lorsque l'utilisateur du second téléphone TB parle.

Il peut en outre comporter un module d'analyse de bruit MAB dont l'entrée de signaux est couplée à la voix de réception VR et dont la sortie est couplée à un module de génération de bruit de confort MGBC, dont la sortie alimente le module de traitement MT afin qu'il l'intègre au signal traité ST qu'il délivre. Plus précisément, le module d'analyse de bruit MAB analyse le bruit de fond ambiant afin d'en extraire les principaux paramètres, tandis que le module de génération de bruit de confort MGBC génère tout d'abord un bruit « blanc » qu'il filtre/normalise avec les paramètres déterminés par le module d'analyse de bruit MAB afin de délivrer un bruit de confort proche du bruit blanc. Cela permet d'éviter qu'un interlocuteur ne perçoive un bruit de fond haché résultant de l'atténuation de son bruit de fond ambiant par le module de traitement MT. Dans ce cas, le module de gestion MG est préférentiellement couplé au module d'analyse de bruit MAB et au module de génération de bruit de confort MGBC afin de leur fournir des instructions de fonctionnement ou des informations.

Le dispositif de réduction d'écho D selon l'invention, et notamment ses module de traitement MT, module de gestion MG et modules de filtrage F1 et F2, peuvent être réalisés sous la forme de circuits électroniques ou d'une combinaison de circuits électroniques et de modules logiciels (ou informatiques).

L'invention ne se limite pas aux modes de réalisation de dispositif de réduction d'écho et de serveur de communications décrits ci-avant, seulement à titre d'exemple, mais elle englobe toutes les variantes que pourra envisager l'homme de l'art dans le cadre des revendications ci-après.

Dans ce qui précède on a décrit un dispositif de réduction d'écho implanté dans un serveur de communications (ou passerelle). Mais, un tel dispositif peut être implanté dans d'autres équipements, et notamment dans des terminaux de communication, comme par exemple des téléphones, ou dans des satellites de communications.

## Revendications

1. Dispositif (D) de réduction d'un signal d'écho (E) affectant un signal reçu (Rx) et provenant d'un signal transmis (Tx), ce dispositif comprenant :
- des moyens de filtrage (F1), à coefficients de filtrage adaptatifs, pour délivrer un signal dit d'un écho estimé (SF), à partir d'un signal transmis (Tx),
- des moyens de soustraction (F2) pour délivrer un signal dit à écho résiduel (SER) à partir d'un signal reçu (Rx), et du signal d'écho estimé (SF),
- des moyens de traitement (MT) pour délivrer un signal (ST) dit à écho résiduel réduit, à partir du signal à écho résiduel (SER), lorsque le signal à écho résiduel (SER) présente un niveau inférieur ou égal à un seuil choisi ;
- des moyens (MG) pour estimer la valeur d'un paramètre représentatif du niveau du signal d'écho (E) pendant une phase de convergence du niveau du signal d'écho résiduel (SER) vers un seuil de référence choisi,
- et des moyens (MG) pour calculer dynamiquement le seuil utilisé par lesdits moyens de traitement (MT), en fonction de ladite valeur estimée d'un paramètre représentatif du niveau du signal d'écho (E), de sorte que lesdits moyens de traitement (MT) délivrent de façon sensiblement permanente ledit signal (ST) à écho résiduel réduit ;
**caractérisé en ce que** ledit paramètre représentatif est la perte de retour d'écho, dont la valeur représente l'atténuation de niveau entre le signal transmis (Tx) et le signal d'écho (E) affectant un signal reçu (Rx) et provenant du signal transmis (Tx).

2. Dispositif selon la revendication 1, **caractérisé en ce que** lesdits moyens (MG) pour calculer dynamiquement le seuil sont agencés pour faire varier de façon dynamique le seuil lorsque la perte de retour d'écho est inférieure à une valeur choisie.

3. Dispositif selon la revendication 1, **caractérisé en ce que** lesdits moyens (MG) pour calculer dynamiquement le seuil sont agencés pour fixer la valeur du seuil à une valeur égale audit seuil de référence lorsque ladite phase de convergence est terminée.

4. Dispositif selon la revendication 1, **caractérisé en ce que** lesdits moyens de traitement (MT) sont réalisés sous la forme d'un processeur non linéaire.

5. Dispositif (D) de réduction d'un signal d'écho (E) affectant un signal reçu (Rx) et provenant d'un signal transmis (Tx), ce dispositif comprenant :
- des moyens de filtrage (F1), à coefficients de filtrage adaptatifs, pour délivrer un signal dit d'un écho estimé (SF), à partir d'un signal transmis (Tx),
- des moyens de soustraction (F2) pour délivrer un signal dit à écho résiduel (SER) à partir d'un signal reçu (Rx), et du signal d'écho estimé (SF),
- des moyens de traitement (MT) pour délivrer un signal (ST) dit à écho résiduel réduit, à partir du signal à écho résiduel (SER), lorsque le signal à écho résiduel (SER) présente un niveau inférieur ou égal à un seuil choisi ;
- des moyens (MG) pour estimer la valeur d'un paramètre représentatif du niveau du signal d'écho (E) pendant une phase de convergence du niveau du signal d'écho résiduel (SER) vers un seuil de référence choisi,
- et des moyens (MG) pour calculer dynamiquement le seuil utilisé par lesdits moyens de traitement (MT), en fonction de ladite valeur estimée d'un paramètre représentatif du niveau du signal d'écho (E), de sorte que lesdits moyens de traitement (MT) délivrent de façon sensiblement permanente ledit signal (ST) à écho résiduel réduit ;
**caractérisé en ce que** ledit paramètre représentatif est une estimation de la durée de la phase de convergence du niveau du signal d'écho résiduel (SER) vers un seuil de référence choisi.

6. Dispositif selon la revendication 5, **caractérisé en ce que** lesdits moyens (MG) pour calculer dynamiquement le seuil sont agencés pour déterminer la valeur dudit seuil en fonction en outre des coefficients de filtrage des moyens de filtrage (F1).

7. Dispositif selon la revendication 5, **caractérisé en ce que** lesdits moyens (MG) pour calculer dynamiquement le seuil sont agencés pour fixer ledit seuil :
- soit à une première valeur choisie lorsque la durée de la phase de convergence est inférieure à une première durée choisie,
- soit à une deuxième valeur choisie, inférieure à la première valeur, lorsque la durée de la phase de convergence est comprise entre ladite première durée et une deuxième durée choisie, supérieure à la première durée, et que lesdits coefficients de filtrage sont supérieurs à une première valeur choisie,
- soit à une troisième valeur choisie, inférieure à la deuxième valeur, lorsque la durée de la phase de convergence est comprise entre ladite deuxième durée et une troisième durée choisie, supérieure à la deuxième durée, et que lesdits coefficients de filtrage sont supérieurs à une deuxième valeur choisie, supérieure à la première valeur,
- soit à une quatrième valeur choisie, inférieure à la troisième valeur, lorsque la durée de la phase de convergence est comprise entre ladite troisième durée et une quatrième durée choisie, supérieure à la troisième durée, et que lesdits coefficients de filtrage sont supérieurs à une troisième valeur choisie, supérieure à la deuxième valeur,
- soit à une cinquième valeur choisie, inférieure à la quatrième valeur et égale audit seuil de référence, lorsque la durée de la phase de convergence est supérieure ou égale à ladite quatrième durée choisie.

8. Dispositif selon la revendication 7, **caractérisé en ce que** ladite première valeur choisie des coefficients de filtrage est égale à 200, ladite deuxième valeur choisie des coefficients de filtrage est égale à 512, et ladite troisième valeur choisie des coefficients de filtrage est égale à 1500.

9. Serveur de communications (SC), **caractérisé en ce qu'**il comprend au moins un dispositif de réduction d'écho (D) selon l'une des revendications précédentes.
